(19) Europäisches Patentamt / European Patent Office / Office européen des brevets

(11) **EP 4 737 709 A1**

(12) **EUROPEAN PATENT APPLICATION**
published in accordance with Art. 153(4) EPC

(43) Date of publication:
**06.05.2026  Bulletin 2026/19**

(21) Application number: **23943225.5**

(22) Date of filing: **12.10.2023**

(51) International Patent Classification (IPC):
*F03D 7/02* (2006.01)      *F03D 7/04* (2006.01)

(52) Cooperative Patent Classification (CPC):
Y02E 10/72

(86) International application number:
**PCT/CN2023/124163**

(87) International publication number:
**WO 2025/000746 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.06.2023  CN 202310777175**

(71) Applicant: **Beijing Goldwind Science & Creation Windpower Equipment Co. Ltd.
Beijing 100176 (CN)**

(72) Inventors:
• YAO, Shigang
  **Beijing 100176 (CN)**
• LIU, Zhongpeng
  **Beijing 100176 (CN)**

(74) Representative: **Hoffmann Eitle
Patent- und Rechtsanwälte PartmbB
Arabellastraße 30
81925 München (DE)**

(54) **YAW CONTROL METHOD AND APPARATUS, CONTROLLER, AND WIND TURBINE GENERATOR SET**

(57)    A yaw control method and apparatus, a controller, and a wind turbine generator set. The yaw control method comprises: determining a wind direction deviation value on the basis of the wind-facing direction of an impeller of the wind turbine generator set and an actual incoming flow wind direction; and in response to the absolute value of the wind direction deviation value being greater than a predetermined threshold, and a duration in which the absolute value of the wind direction deviation value is greater than the predetermined threshold being greater than a predetermined time period, controlling the wind turbine generator set to yaw. The yaw control method can improve the generation power of the wind turbine generator set.

FIG. 1

EP 4 737 709 A1

**Description**

**FIELD**

The present disclosure generally relates to the field of wind power, and in particular, to a yaw control method, a yaw control apparatus, a controller, and a wind turbine.

**BACKGROUND**

As an impeller diameter and an overall capacity of a wind turbine increase, a turbine cost rises.

A yaw system of the wind turbine is a critical component of the turbine. On the one hand, yaw misalignment will reduce the acquired amount of wind energy. On the other hand, errors in yaw may increase the loads on various components of the wind turbine.

Furthermore, frequent yawing may shorten mechanical life of the yaw system. Therefore, accurately identifying yaw requirements and/or reducing a yawing frequency are crucial for increasing the mechanical life of the yaw system of the wind turbine and enhancing the safety of the wind turbine.

Moreover, a current independent pitch control technology is mainly used to reduce an unbalanced load on an impeller, such as a pitch bending moment and a torsional moment of the hub. Controlling the wind turbine to yaw through the independent pitch control can effectively reduce pressure of the yaw system. However, since the bending moment of the hub in a left-right direction dynamically and periodically changes during impeller rotation, discontinuities may occur in the yawing process of the yaw system.

**SUMMARY**

One of the objectives of exemplary embodiments in the present disclosure is to provide a yaw control method capable of controlling a wind turbine to yaw.

According to a first aspect of the present disclosure, a yaw control method for a wind turbine includes: determining a wind direction deviation value based on an impeller alignment direction and an actual incoming wind direction of the wind turbine; and controlling the wind turbine to yaw in response to an absolute value of the wind direction deviation value being greater than a predetermined threshold and a duration in which the absolute value of the wind direction deviation value is greater than the predetermined threshold being greater than a predetermined time period.

According to a second aspect of the present disclosure, a computer-readable storage medium stores instructions or a program, and the instructions or the program, when executed by a processor, cause the processor to implement the yaw control method for a wind turbine described above.

According to a third aspect of the present disclosure, a yaw control apparatus for a wind turbine includes: a first determination unit, configured to determine a wind direction deviation value based on an impeller alignment direction and an actual incoming wind direction of the wind turbine; and a first control unit, configured to control the wind turbine to yaw in response to an absolute value of the wind direction deviation value being greater than a predetermined threshold and a duration in which the absolute value of the wind direction deviation value is greater than the predetermined threshold being greater than a predetermined time period.

According to a fourth aspect of the present disclosure, a controller for a wind turbine includes a processor and a computer-readable storage medium. The computer-readable storage medium stores a program or instructions, and the program or the instructions, when executed by the processor, cause the processor to implement the yaw control method for a wind turbine described above.

According to a fifth aspect of the present disclosure, a wind turbine includes the yaw control apparatus of the wind turbine described above or the controller of the wind turbine described above.

The yaw control method and the yaw control apparatus according to the embodiments of the present disclosure can reduce the yaw frequency.

The yaw control method and the yaw control apparatus according to the embodiments of the present disclosure can reduce the yaw error and improve the power generation of the wind turbine.

**BRIEF DESCRIPTION OF THE DRAWINGS**

The above and other objectives and features of the embodiments of the present disclosure will be clearer from the following description in conjunction with the drawings that exemplarily illustrate the embodiments.

FIG. 1 is a schematic diagram showing various torsional moments according to an embodiment of the present disclosure;

FIG. 2 is a flowchart of a yaw control method according to a first embodiment of the present disclosure;

FIG. 3 is a flowchart of a yaw control method according to a second embodiment of the present disclosure;

FIG. 4 is a flowchart of pitch control during yawing according to an embodiment of the present disclosure;

FIG. 5 is a block diagram of a yaw control apparatus according to an embodiment of the present disclosure;

FIG. 6 is a graph illustrating a wind direction deviation value according to an embodiment of the present disclosure;

FIG. 7 is a graph illustrating power generation according to an embodiment of the present disclosure;

FIG. 8 is a graph illustrating a yaw error according to an embodiment of the present disclosure; and

FIG. 9 is a block diagram of a yaw control apparatus according to an embodiment of the present disclosure.

## DETAILED DESCRIPTION

Specific embodiments below help to gain a comprehensive understanding of the method, apparatus, and/or system described herein. However, an order of operations described herein is only exemplary and the present disclosure is not limited to the order described here. The order of operations may be equivalently substituted or changed except for operations that must occur or be performed in a specific order. Furthermore, for clarity and conciseness, descriptions of matters well known in the art will be omitted or simplified.

The features described herein may be implemented in different forms and should not be limited to the examples described herein.

Unless otherwise defined, all terms (including technical terms and scientific terms) used herein have the same meanings as those commonly understood by an ordinary technical person in the art to which the present disclosure belongs upon the understanding of the present disclosure. Unless explicitly defined otherwise, terms (such as terms defined in a general dictionary) should be interpreted as having meanings consistent with their respective contexts in the relevant field and in the present disclosure, and should not be interpreted ideally or excessively formally.

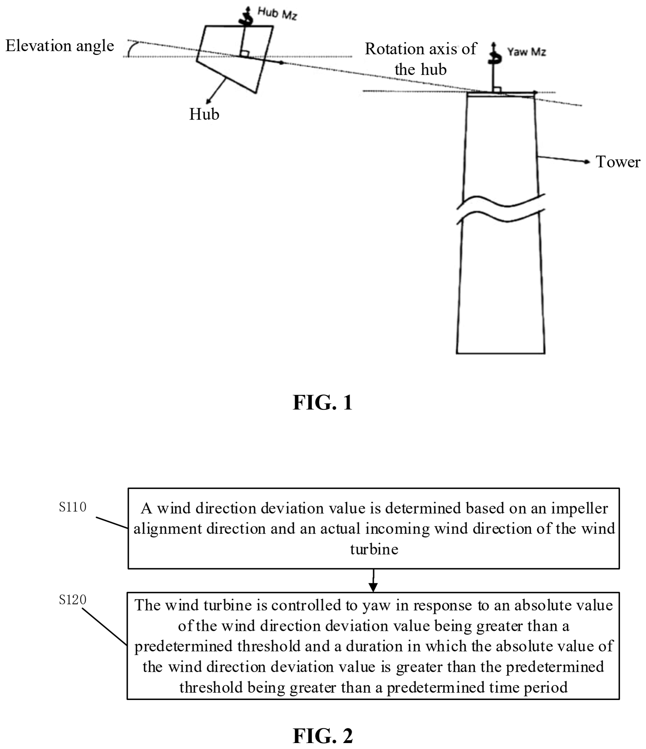

In the present disclosure, yaw requirements are accurately identified based on a wind direction deviation value. Furthermore, in the present disclosure, during yaw control, pitch control is performed based on a pitch angle determined from a yaw gain, a yaw-direction hub torque of a wind turbine is adjusted (for example, dynamically adjusted) (which increases an unbalanced load of the hub), thereby reducing the yaw frequency, reducing a wind alignment deviation value, and increasing power generation. Specific embodiments of the present disclosure will be described in conjunction with FIG. 1 to FIG. 9.

FIG. 1 is a schematic diagram showing various moments according to an embodiment of the present disclosure.

Referring to FIG. 1, in the overall design of a wind turbine, a yaw torsional moment (Yaw Mz) is a primary moment load affecting operation of a yaw system. As shown in the coordinate transformation in FIG. 1, when an elevation angle of a hub (or a nacelle) of the wind turbine is small, a yaw-direction hub torque (Hub Mz)≈the yaw torsional moment (Yaw Mz). Therefore, subsequent yaw control may be performed by controlling the yaw-direction hub torque. Accurate identification of a yaw demand is required before controlling the yaw system of the wind turbine.

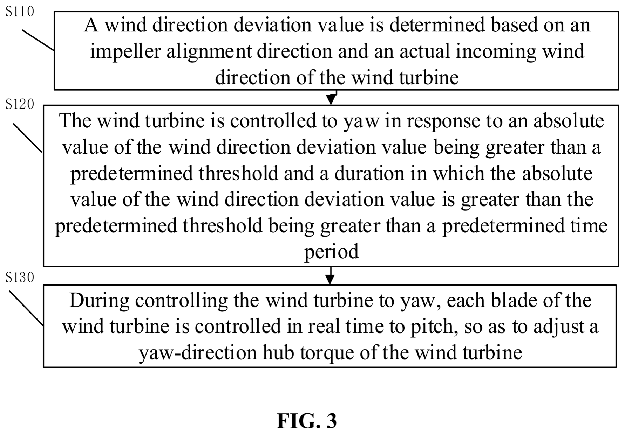

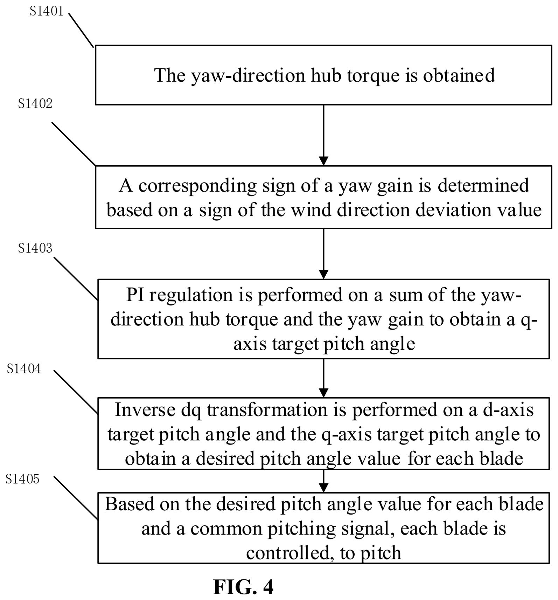

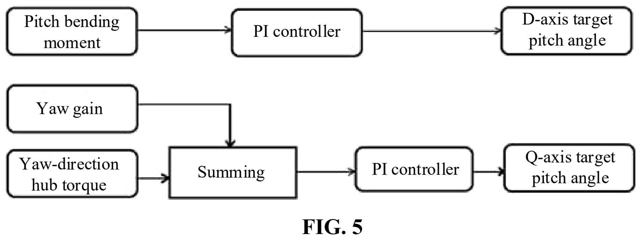

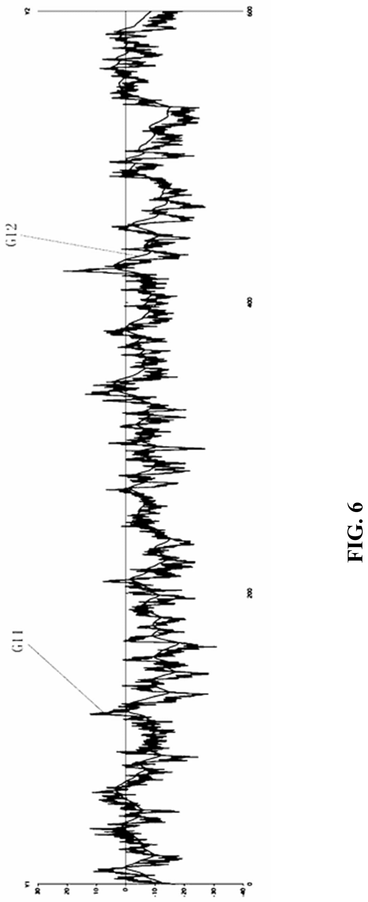

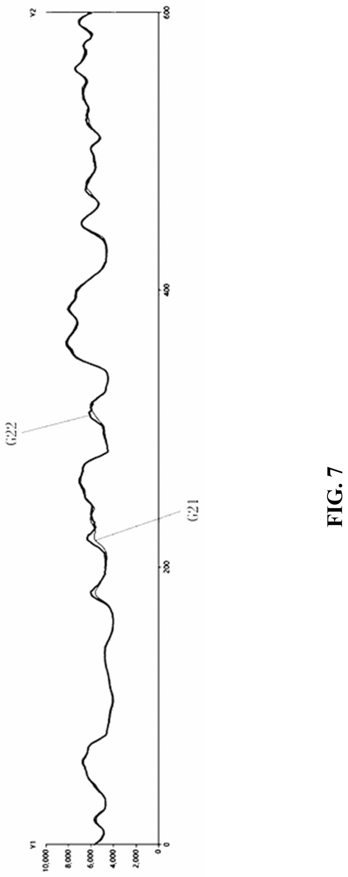

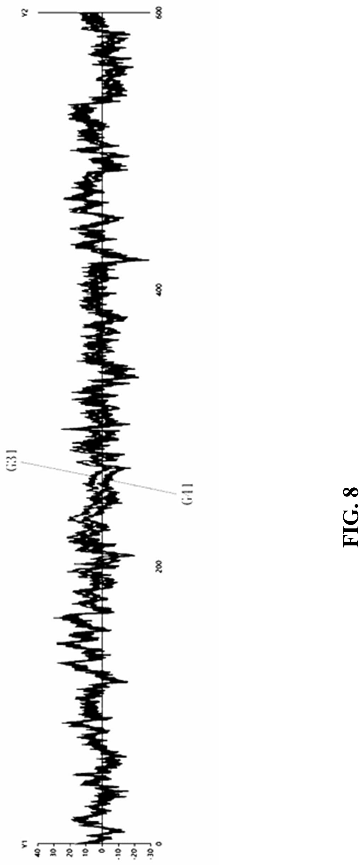

FIG. 2 is a flowchart of a yaw control method according to a first embodiment of the present disclosure; FIG. 3 is a flowchart of a yaw control method according to a second embodiment of the present disclosure; FIG. 4 is a flowchart of pitch control during yawing according to an embodiment of the present disclosure; FIG. 5 is a block diagram of a yaw control apparatus according to an embodiment of the present disclosure; FIG. 6 is a graph illustrating a wind direction deviation value according to an embodiment of the present disclosure; FIG. 7 is a graph illustrating power generation according to an embodiment of the present disclosure; and FIG. 8 is a graph illustrating a yaw error according to an embodiment of the present disclosure.

Referring to FIG. 2, the yaw control method according to the first embodiment of the present disclosure may include step S110 and step S120.

In step S110, a wind direction deviation value is determined based on an impeller alignment direction and an actual incoming wind direction of the wind turbine.

A wind direction sensor or wind vane sensor may be installed on the nacelle of the wind turbine. The actual incoming wind direction may be determined via the wind vane sensor, thereby determining wind direction deviation as a condition for determining whether yaw control needs to be performed.

As an example, assuming that a wind direction reference value for performing wind alignment by yawing based on the actual incoming wind direction is 180°, the wind direction deviation may be obtained by subtracting 180° from the unadjusted current impeller alignment direction.

Since the wind vane sensor performs real-time measurement to obtain incoming wind direction information in an operating environment of the wind turbine, the wind direction deviation is filtered to obtain a wind direction deviation value, to increase the accuracy of yaw control.

That is, step S110 of determining a wind direction deviation value based on an impeller alignment direction and an actual incoming wind direction of the wind turbine may include: obtaining the impeller alignment direction of the wind turbine and measuring the actual incoming wind direction by a wind direction sensor; calculating a difference between the impeller alignment direction and the actual incoming wind direction to obtain a wind direction deviation; and filtering the wind direction deviation to obtain the wind direction deviation value.

The filtering applied to the wind direction deviation here may be low-pass filtering to filter out a high-frequency component from the wind direction deviation.

In an embodiment, referring to FIG. 6, a horizontal axis represents time, a vertical axis represents degrees, a curve G11 represents a wind direction deviation, and a curve G12 represents a wind direction deviation value in FIG. 6. As can be seen from FIG. 6, high-frequency noise in the wind direction deviation is filtered out.

As an example, the larger the wind direction deviation value is, the more quickly yaw control may be activated. The smaller the wind direction deviation is, the more slowly the yaw control may be activated. That is, multiple levels of yaw control may be configured based on the wind direction deviation value.

In step S120, the wind turbine is controlled to yaw in response to an absolute value of the wind direction deviation value being greater than a predetermined threshold and a duration in which the absolute value of the wind direction deviation value is greater than the predetermined threshold being greater than a predetermined time period.

Specifically, the step S120 of controlling the wind turbine to yaw in response to an absolute value of the wind direction deviation value being greater than a predetermined threshold and a duration in which the absolute value of the wind direction deviation value is greater than the predetermined threshold being greater than a predetermined time period may include: controlling the wind turbine to yaw in response to the absolute value of the wind direction deviation value being greater than a first predetermined threshold and a first duration in which the absolute value of the wind direction deviation value is greater than the first predetermined threshold being greater than a first predetermined time period; or controlling the wind turbine to yaw in response to the absolute value of the wind direction deviation value being greater than a second predetermined threshold and a second duration in which the absolute value of the wind direction deviation value is greater than the second predetermined threshold being greater than a second predetermined time period, where the first predetermined threshold is less than the second predetermined threshold, and the first predetermined time period is greater than the second predetermined time period.

Although two thresholds are described above, a threshold greater than the second predetermined threshold, and a time threshold greater than the second predetermined time period can be further set for determining whether to perform yaw control. Further, in specific implementations, it is not limited to two thresholds. Three, four, or five thresholds may be set for determining whether to perform the yaw control. These thresholds are used in a manner such that a larger wind direction deviation value triggers an earlier yaw control, while a smaller wind direction deviation value triggers a later yaw control. When any of conditions corresponding to the five thresholds is satisfied, yaw control is triggered.

The first predetermined threshold, the second predetermined threshold, the first predetermined time period, the second predetermined time period mentioned above, as well as predetermined thresholds and predetermined time periods mentioned below, may all be empirical values and may be adaptively adjusted as required.

Referring to FIG. 3, the yaw control method according to the first embodiment of the present disclosure further include step S130. In response to the absolute value of the wind direction deviation value being greater than the predetermined threshold and the duration in which the absolute value of the wind direction deviation value is greater than the predetermined threshold being greater than the predetermined time period, the wind turbine is controlled to yaw, and in step S130, during controlling the wind turbine to yaw, each blade of the wind turbine is controlled in real time to pitch, so as to adjust a yaw-direction hub torque of the wind turbine.

As shown in FIG. 1, an increase in the yaw-direction hub torque will increase the yaw torsional moment (Yaw Mz). That is, during yaw control, the yaw-direction hub torque of the wind turbine is increased by changing a pitch angle, such that yaw torsional moment (Yaw Mz) is increased, rendering the yaw control of the wind turbine being performed more rapidly and accurately. Therefore, the yawing frequency of the wind turbine is reduced, rapid alignment of the wind turbine with wind direction is achieved, and/or alignment accuracy (which aims to reduce alignment deviation) is improved. In other words, it can increase the yaw-direction hub torque during at least part of a time period of the yaw control, and thus the yaw torsional moment is increased, thereby rendering the yaw control of the wind turbine being performed more rapidly and accurately.

Specifically, reference can be made to FIG. 7, in which a horizontal axis represents time, a vertical axis represents power generation (kW), a curve G21 represents power generation in a case that the yaw control method according to the present disclosure is not performed, and a curve G22 represents power generation in a case that the yaw control method according to the present disclosure is performed. As can be seen from FIG. 7, the power generation is improved when the yaw control method according to the present disclosure is used.

Additionally, reference can be made to FIG. 8, in which a horizontal axis represents time, a vertical axis represents degrees, a curve G31 represents a yaw error in a case that the yaw control method according to the present disclosure is not performed, and a curve G32 represents a yaw error in a case that the yaw control method according to the present disclosure is performed. As can be seen from FIG. 8, the yaw error is reduced when the yaw control method according to the present disclosure is used.

For each blade of the wind turbine, controlling the blade in real time to pitch may be independent of any other blade. Specifically, the pitch angle of each blade can be determined based on a yaw gain; a pitching command value for each blade is determined based on the pitch angle of each blade and a unified pitching signal for all three blades; and each blade is controlled according to the pitching command value for the blade to pitch.

Specifically, the step of controlling each blade of the wind turbine in real time to pitch may include: controlling, based on the yaw gain determined from the wind direction deviation value, each blade of the wind turbine to pitch.

As an example, in response to the wind direction deviation value being greater than zero, the yaw gain is determined to be negative, for example, the yaw gain=-1×yaw-gain set value; and in response to the wind direction deviation value being less than zero, the yaw gain is determined to be positive, for example, the yaw gain=+1×yaw-gain set value.

The yaw-gain set value is always greater than zero, and the yaw-gain set value is less than the yaw-direction hub torque (for example, less than half the yaw-direction hub torque, that is, the absolute value of the yaw gain is less than half the yaw-direction hub torque). The absolute value of the yaw gain being less than the yaw-direction hub torque can prevent the yaw-direction hub torque and the yaw torsional moment from excessively increasing to exceed a limit during yaw control.

In response to alignment with the wind direction by yawing being achieved, yaw control may be ended. In view of instability of the wind direction, the wind turbine may be controlled to stop yawing when the wind direction deviation value is below a predetermined threshold and a corresponding duration meets requirements.

Specifically, the yaw control method of the present disclosure may further include: controlling the wind turbine to stop yawing in response to the absolute value of the wind direction deviation value being less than a third predetermined threshold and a third duration in which the absolute value of the wind direction deviation value is less than the third predetermined threshold being greater than a third preset time period. The third predetermined threshold here is less than the predetermined threshold.

Additionally, a dead zone may be set to prevent frequent activation of yaw control.

Specifically, yaw control is not activated in response to the absolute value of the wind direction deviation value being not less than the third predetermined threshold and being not greater than the predetermined threshold.

That is, yaw control may not be activated when the absolute value of the wind direction deviation value falls between the above third predetermined threshold and the above predetermined threshold.

Referring to FIG. 4, the step of controlling, based on the yaw gain determined from the wind direction deviation value, each blade of the wind turbine to pitch may include step S1401, step S1402, step S1403, step S1404, and step S1405.

In step S1401, the yaw-direction hub torque is obtained.

The yaw-direction hub torque may be obtained based on a calibrated relationship between a yaw-direction torque of a blade root and the yaw-direction hub torque, where the yaw-direction torque of the blade root may be obtained by using a load sensor.

As an example, the yaw-direction hub torque may also be obtained via dq transformation.

For a wind turbine with three blades, transformation can be performed on loads at respective blade roots of the three blades based on a non-rotating dq axes through a following equation (1) to obtain a yaw-direction hub torque and a pitch bending moment of the hub.

$$\begin{bmatrix} HubMy \\ HubMz \end{bmatrix} = \begin{bmatrix} \sin(\varphi) & \cos\left(\varphi + \frac{2}{3}\pi\right) & \cos\left(\varphi + \frac{4}{3}\pi\right) \\ \sin(\varphi) & \sin\left(\varphi + \frac{2}{3}\pi\right) & \sin\left(\varphi + \frac{4}{3}\pi\right) \end{bmatrix} \begin{bmatrix} M_{y1} \\ M_{y2} \\ M_{y3} \end{bmatrix} \qquad \text{equation (1)}$$

For a wind turbine with two blades, transformation can be performed on loads at respective blade roots of the two blades based on the non-rotating dq axes through a following equation (2) to obtain the yaw-direction hub torque and the pitch bending moment of the hub.

$$\begin{bmatrix} HubMy \\ HubMz \end{bmatrix} = \begin{bmatrix} cos\varphi & \cos(\varphi + \pi) \\ sin\varphi & \sin(\varphi + \pi) \end{bmatrix} \begin{bmatrix} M_{y1} \\ M_{y2} \end{bmatrix} \qquad \text{equation (2)}$$

In equations (1) and (2), $\varphi$ represents an azimuth angle of an impeller, $M_{y1}$, $M_{y2}$, and $M_{y3}$ represent loads at respective blade roots of the blades in a certain direction, and *Hub My* and *Hub Mz* represent the pitch bending moment of the hub and the yaw-direction hub torque, respectively.

In step S1402, a corresponding sign of a yaw gain is determined based on a sign of the wind direction deviation value.

As described above, the absolute value of the yaw gain is less than the yaw-direction hub torque, preferably less than half the yaw-direction hub torque.

In step S1403, PI (Proportional-Integral) regulation is performed on a sum of the yaw-direction hub torque and the yaw gain to obtain a q-axis target pitch angle.

Referring to FIG. 5, a sum of the determined yaw gain and the yaw-direction hub torque is obtained, and the sum is inputted into a PI controller. After PI regulation is performed by the PI controller, the q-axis target pitch angle is obtained.

In step S1404, inverse dq transformation is performed on a d-axis target pitch angle and the q-axis target pitch angle to obtain a desired pitch angle value for each blade.

For a wind turbine with three blades, inverse transformation is performed through equation (3) below to obtain the desired pitch angle value for each blade.

$$\begin{bmatrix} \theta_1 \\ \theta_2 \\ \theta_3 \end{bmatrix} = \begin{bmatrix} \cos(\varphi) & \sin\varphi \\ \cos(\varphi + \frac{2}{3}\pi) & \sin(\varphi + \frac{2}{3}\pi) \\ \cos(\varphi + \frac{4}{3}\pi) & \sin(\varphi + \frac{4}{3}\pi) \end{bmatrix} \begin{bmatrix} \theta_d \\ \theta_q \end{bmatrix} \qquad \text{equation (3)}$$

For a wind turbine with two blades, inverse transformation is performed through equation (4) below to obtain the desired pitch angle value for each blade.

$$\begin{bmatrix} \theta_1 \\ \theta_2 \end{bmatrix} = \begin{bmatrix} cos\varphi & sin\varphi \\ \cos(\varphi + \pi) & \sin(\varphi + \pi) \end{bmatrix} \begin{bmatrix} \theta_d \\ \theta_q \end{bmatrix} \qquad \text{equation (4)}$$

In equation (3) and equation (4), $\varphi$ represents the azimuth angle of the impeller, $\theta_1$, $\theta_2$, and $\theta_3$ represent the desired pitch angle value for a first blade, a second blade, and a third blade respectively, and $\theta_d$ and $\theta_q$ represent the d-axis target pitch angle and q-axis target pitch angle respectively.

During calculation, the d-axis target pitch angle has less effect on the yaw-direction hub torque. Therefore, the d-axis target pitch angle may be set to zero during calculation.

As an example, the d-axis target pitch angle may also be determined based on the pitch bending moment of the hub.

The step of controlling, based on a yaw gain determined from the wind direction deviation value, each blade of the wind turbine to pitch may include: obtaining a pitch bending moment of the hub; performing PI regulation on the pitch bending moment to obtain the d-axis target pitch angle, where the yaw-direction hub torque and the pitch bending moment are obtained by performing dq transformation on loads of respective blade roots of the wind turbine.

Specifically, referring to FIG. 5, the pitch bending moment may be inputted to the PI controller to perform PI regulation to obtain the d-axis target pitch angle.

The PI algorithms respectively performed by the PI controller related to the pitch bending moment and a PI controller related to the yaw-direction hub torque may be known PI algorithms. In the present disclosure, a proportional coefficient and an integral coefficient of existing PI algorithms may be adjusted (tuned). Both the proportional coefficient and the integral coefficient may be empirical values and may be predetermined and tuned based on a control curve.

Similar to the obtaining of the yaw-direction hub torque, the pitch bending moment of the hub may also be obtained through calibration or through dq transformation. A specific transformation method may refer to equation (1) and equation (2) above. However, the methods for obtaining the pitch bending moment of the hub and yaw-direction hub torque are not limited thereto.

In step S1405, based on the desired pitch angle value for each blade and a unified pitching signal, each blade is controlled, to pitch.

Specifically, a pitching command value for each blade may be determined based on the pitch angle of the blade and the unified pitching signal for all three blades (the unified pitching signal for all three blades may be the same one); and each blade is controlled, based on a corresponding pitching command value for the blade, to pitch. For a wind turbine with two blades, the unified pitching command described above is applied to both blades.

Specifically, the step of controlling, based on a corresponding desired pitch angle value of the blade and a unified pitching signal, each blade to pitch may include: for each blade, combining the desired pitch angle value for each blade with the unified pitching signal, to obtain a pitching angle command value for each blade; and controlling, based on the pitching angle command value for each blade, each blade to pitch.

Based on the pitch angle determined from the wind direction deviation value, independent pitching may be applied in yaw control, to adjust the yaw-direction hub torque during yaw control (increase an unbalanced load), so as to increase a yaw torsional moment, thereby reducing yawing frequency and/or reducing wind-alignment deviation.

In other words, different pitch angles may be determined based on different wind direction deviation values, and pitch control may be performed based on these pitch angles to increase the yaw-direction torsional moment.

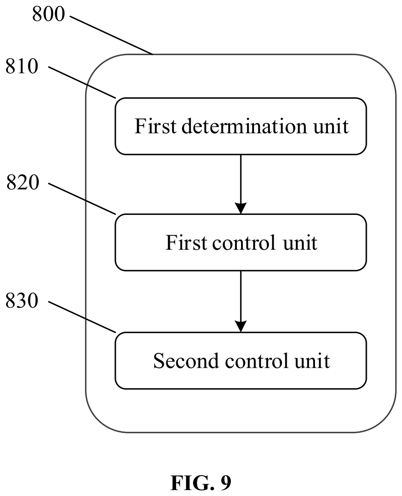

FIG. 9 is a block diagram of a yaw control apparatus according to an embodiment of the present disclosure.

The yaw control apparatus 800 according to an embodiment of the present disclosure may include: a first determination unit 810 and a first control unit 820. Furthermore, the yaw control apparatus 800 according to an embodiment of the present disclosure may further include a second control unit 830.

The first determination unit 810 is configured to determine a wind direction deviation value based on an impeller alignment direction and an actual incoming wind direction of the wind turbine.

The first determination unit 810 is configured to obtain the impeller alignment direction of the wind turbine and the actual incoming wind direction measured via a wind direction sensor (or a wind vane sensor); and calculate a difference between the impeller alignment direction and the actual incoming wind direction to obtain a wind direction deviation. As an example, the first determination unit is further configured to apply low-pass filtering to the wind direction deviation to obtain the wind direction deviation value described above

The first control unit 820 is configured to control the wind turbine to yaw in response to an absolute value of the wind direction deviation value being greater than a predetermined threshold and a duration in which the absolute value of the wind direction deviation value is greater than the predetermined threshold being greater than a predetermined time period.

Whether the yaw control is activated by the first control unit 820 is determined based on following conditions, or based on three thresholds, four thresholds, or five thresholds which are set for determining whether to perform yaw control. These thresholds are used in a manner such that a larger wind direction deviation value triggers an earlier yaw control.

The conditions are as follows: ① the absolute value of the wind direction deviation value>DirThreshold1 (a first predetermined threshold) and the first duration is greater than T1 (a first predetermined time period); ② the absolute value of the wind direction deviation value>DirThreshold2 (a second predetermined threshold) and the second duration is greater than T2 (a second predetermined time period); and ③ when the absolute value of the wind direction deviation value>DirThreshold3 (a third predetermined threshold) and the third duration is greater than T3 (a third predetermined time period).

$$DirThrehold3 > DirThrehold2 > DirThrehold1,$$

and T3<T2<T1.

As described above, a threshold smaller than DirThreshold3 may be set as a lower limit of the dead zone, and DirThreshold3 may be set as an upper limit of the dead zone. A smaller threshold may also be set as a condition for determining to stop yawing.

The second control unit 830 is configured to perform, during the first control unit performs yaw control, control each blade of the wind turbine in real time to pitch, so as to adjust a yaw-direction hub torque of the wind turbine (for example, increasing the yaw-direction hub torque during at least part of a time period of the yaw control).

The second control unit 830 is configured to determine an yaw gain with an opposite sign to a sign of the wind direction deviation value, determine a q-axis target pitch angle based on the yaw gain and the yaw-direction hub torque, then perform inverse dq transformation on a d-axis target pitch angle and the q-axis target pitch angle to obtain a desired pitch angle value for each blade, and perform pitching based on the desired pitch angle value. The d-axis target pitch angle and the q-axis target pitch angle may be determined by using the above equation (3) and equation (4), which is not repeated here. Alternatively, the d-axis target pitch angle may be directly set to zero.

Specifically, the second control unit 830 is configured to determine the yaw gain to be negative in response to the wind direction deviation value being greater than zero, for example, the yaw gain=-1 ×yaw gain set value; and determine the yaw gain to be positive in response to the wind direction deviation value being less than zero, for example, the yaw gain=+1×yaw gain set value.

The yaw gain set value is always greater than zero, and the yaw gain set value is less than the yaw-direction hub torque (for example, less than half the yaw-direction hub torque), that is, the absolute value of the yaw gain is less than half the yaw-direction hub torque. The absolute value of the yaw gain being less than half the yaw-direction hub torque can reduce the possibility of the yaw-direction hub torque and a yaw torsional moment becoming excessively large and exceeding a limit during yaw control.

Specifically, the second control unit 830 is configured to determine a pitching command value for each blade based on the pitch angle of each blade and a unified pitching signal for all three blades (the unified pitching signal for all three blades may be the same one). Each blade is controlled, based on a corresponding pitching command value for the blade, to pitch.

For example, the second control unit 830 is configured to combine the desired pitch angle value corresponding to each blade with the unified pitching signal to obtain a pitching angle command value for the blade; and control, based on the pitching angle command value for each blade, each blade to pitch.

The second control unit 830 is configured to apply, based on the pitch angle determined from the wind direction deviation value, independent pitching in yaw control, to adjust the controlling, based on the pitching angle command value for each blade, each blade to pitch during the yaw control, so as to adjust a yaw torsional moment, thereby reducing yawing frequency and/or reducing wind-alignment deviation.

It should be understood that each unit or module in the yaw control apparatus according to the exemplary embodiments of the present disclosure may be implemented through hardware components and/or software components. Those skilled in the art may implement the various units for example by utilizing a field programmable gate array (FPGA), an application specific integrated circuit (ASIC), or a software algorithm based on the processes performed by various defined units.

The operations in the above steps may be written as a software program or instructions. Therefore, the control method according to the exemplary embodiments of the present disclosure may be implemented by software. A computer-readable storage medium according to an exemplary embodiment of the present disclosure may store a computer program. The computer program, when executed by a processor, performs the yaw control method as described in the exemplary embodiments above.

According to the embodiments of the present disclosure, the apparatus (such as modules or functions) or the method may be implemented by the program or the instructions stored in the computer-readable storage medium. The instructions, when executed by the processor, cause the processor to perform functions or the method corresponding to the instructions. At least part of the module may be implemented (for example, executed) by the processor. At least part of a programming module may include a module, a program, a routine, an instruction set, and a procedure for executing at least one function. In an example, instructions or software include machine codes (for example, machine codes generated by a compiler) directly executed by one or more processors or computers. In another example, instructions or software include higher-level codes executed by one or more processors or computers using an interpreter. The instructions or the software may be written in any programming language based on the block diagrams and flow charts shown in the drawings and the corresponding descriptions in the specification.

The computer-readable storage medium includes a non-transitory computer readable storage medium, for example, a magnetic medium such as a floppy disk and a magnetic tape, an optical medium (including an optical disk (CD) ROM and DVD ROM), a magnetic optical medium such as a floptical disk, a hardware apparatus designed to store and execute program instructions such as ROM, RAM, and a flash memory. The program instructions include language codes executable by a computer using an interpreter and machine language codes generated by a compiler. The hardware device may be implemented through one or more software modules for performing the operations of the embodiments of the present disclosure.

The modules or programming modules in the present disclosure may include at least one of the foregoing components with some components omitted or other components added. The operations of the modules, the programming modules, or other components may be executed sequentially, in parallel, cyclically, or tentatively. In addition, some operations may be executed in different orders, may be omitted, or extended with other operations.

The computer-readable storage medium and/or yaw control apparatus according to the exemplary embodiments of the present disclosure may form part of a controller (for example, a main controller) of the wind turbine.

The controller of the wind turbine according to the exemplary embodiments of the present disclosure may include a processor and a computer-readable storage medium. The computer-readable storage medium stores a program or instructions, and when the program or instructions are executed by the processor, causes the processor to implement the yaw control method described above.

The wind turbine according to the embodiments of the present disclosure may include the computer-readable storage medium, the yaw control apparatus, or the controller as described above.

With the yaw control method and the yaw control apparatus according to the embodiments of the present disclosure, yaw control requirements can be satisfied and the wind turbine can be controlled to yaw.

With the yaw control method and the yaw control apparatus according to the embodiments of the present disclosure, the yaw error can be improved, and the yaw frequency of the wind turbine can be reduced.

With the yaw control method and the yaw control apparatus according to the embodiments of the present disclosure, power generation can be increased.

Although some exemplary embodiments of the present disclosure are shown and described, those skilled in the art should understand that modifications can be made to the embodiments without departing from the principle and spirit of the present disclosure whose scope is defined by the claims and equivalents thereof. For example, technical features of different embodiments may be combined with each other.

**Claims**

1. A yaw control method for a wind turbine, comprising:

   determining a wind direction deviation value based on an impeller alignment direction and an actual incoming wind direction of the wind turbine; and
   controlling the wind turbine to yaw in response to an absolute value of the wind direction deviation value being greater than a predetermined threshold and a duration in which the absolute value of the wind direction deviation value is greater than the predetermined threshold being greater than a predetermined time period.

2. The yaw control method for a wind turbine according to claim 1, wherein controlling the wind turbine to yaw in response to an absolute value of the wind direction deviation value being greater than a predetermined threshold and a duration in which the absolute value of the wind direction deviation value is greater than the predetermined threshold being greater than a predetermined time period comprises:
   in response to the absolute value of the wind direction deviation value being greater than the predetermined threshold and the duration in which the absolute value of the wind direction deviation value is greater than the predetermined threshold being greater than the predetermined time period, controlling the wind turbine to yaw; and controlling each blade of the wind turbine in real time to pitch, so as to adjust a yaw-direction hub torque of the wind turbine.

3. The yaw control method for a wind turbine according to claim 2, wherein the controlling each blade of the wind turbine in real time to pitch comprises: controlling, based on a yaw gain determined from the wind direction deviation value, each blade of the wind turbine to pitch.

4. The yaw control method for a wind turbine according to claim 3, wherein the controlling, based on a yaw gain determined from the wind direction deviation value, each blade of the wind turbine to pitch comprises:

   obtaining the yaw-direction hub torque;
   determining a corresponding sign of a yaw gain based on a sign of the wind direction deviation value, wherein an absolute value of the yaw gain is less than the yaw-direction hub torque;
   performing proportional-integral (PI) regulation on a sum of the yaw-direction hub torque and the yaw gain, to obtain a q-axis target pitch angle;
   performing inverse dq transformation on a d-axis target pitch angle and the q-axis target pitch angle, to obtain a desired pitch angle value for each blade; and
   controlling, based on the desired pitch angle value for each blade and a unified pitch signal, each blade to pitch.

5. The yaw control method for a wind turbine according to claim 4, wherein the controlling, based on a yaw gain determined from the wind direction deviation value, each blade of the wind turbine to pitch further comprises:

   obtaining a pitch bending moment of the hub; and
   performing PI regulation on the pitch bending moment to obtain the d-axis target pitch angle, wherein the yaw-direction hub torque and the pitch bending moment are obtained by performing dq transformation on a load of a blade root of the wind turbine.

6. The yaw control method for a wind turbine according to claim 4, wherein the controlling, based on the desired pitch angle value for each blade and a unified pitch signal, each blade to pitch comprises:

   combining the desired pitch angle value for each blade with the unified pitch signal, to obtain a pitching angle command value for each blade; and

controlling, based on the pitching angle command value for each blade, each blade to pitch.

7. The yaw control method for a wind turbine according to claim 4, wherein

   in response to the wind direction deviation value being greater than zero, the yaw gain is determined to be negative; and
   in response to the wind direction deviation value being less than zero, the yaw gain is determined to be positive.

8. The yaw control method for a wind turbine according to claim 1, wherein the determining a wind direction deviation value based on an impeller alignment direction and an actual incoming wind direction of the wind turbine comprises:

   obtaining an impeller alignment direction of the wind turbine and measuring the actual incoming wind direction via a wind direction sensor;
   calculating a difference between the impeller alignment direction and the actual incoming wind direction to obtain a wind direction deviation; and
   filtering the wind direction deviation to obtain the wind direction deviation value.

9. The yaw control method for a wind turbine according to any one of claims 1 to 8, wherein the controlling the wind turbine to yaw in response to an absolute value of the wind direction deviation value being greater than a predetermined threshold and a duration in which the absolute value of the wind direction deviation value is greater than the predetermined threshold being greater than a predetermined time period comprises:

   controlling the wind turbine to yaw in response to the absolute value of the wind direction deviation value being greater than a first predetermined threshold and a first duration in which the absolute value of the wind direction deviation value is greater than the first predetermined threshold being greater than a first predetermined time period; or
   controlling the wind turbine to yaw in response to the absolute value of the wind direction deviation value being greater than a second predetermined threshold and a second duration in which the absolute value of the wind direction deviation value is greater than the second predetermined threshold being greater than a second predetermined time period,
   wherein the first predetermined threshold is less than the second predetermined threshold, and the first predetermined time period is greater than the second predetermined time period.

10. The yaw control method for a wind turbine according to any one of claims 1 to 8, wherein the yaw control method further comprises:

    controlling the wind turbine to stop yawing in response to the absolute value of the wind direction deviation value being less than a third predetermined threshold and a third duration in which the absolute value of the wind direction deviation value is less than the third predetermined threshold being greater than a third preset time period,
    wherein the third predetermined threshold is less than the predetermined threshold.

11. The yaw control method for a wind turbine according to claim 10, wherein the controlling the wind turbine to yaw is not performed in response to the absolute value of the wind direction deviation value being not less than the third predetermined threshold and being not greater than the predetermined threshold.

12. A computer-readable storage medium, storing instructions or a program, the instructions or the program, when executed by a processor, cause the processor to implement the yaw control method for a wind turbine according to any one of claims 1 to 11.

13. A yaw control apparatus for a wind turbine, comprising:

    a first determination unit, configured to determine a wind direction deviation value based on an impeller alignment direction and an actual incoming wind direction of the wind turbine; and
    a first control unit, configured to control the wind turbine to yaw in response to an absolute value of the wind direction deviation value being greater than a predetermined threshold and a duration in which the absolute value of the wind direction deviation value is greater than the predetermined threshold being greater than a predetermined time period.

14. A controller for a wind turbine, comprising a processor and a computer-readable storage medium, wherein the computer-readable storage medium stores a program or instructions, and the program or the instructions, when executed by the processor, cause the processor to implement the yaw control method for a wind turbine according to any one of claims 1 to 11.

15. A wind turbine, comprising the yaw control apparatus for a wind turbine according to claim 13 or the controller for a wind turbine according to claim 14.

**FIG. 1**

S110 — A wind direction deviation value is determined based on an impeller alignment direction and an actual incoming wind direction of the wind turbine

S120 — The wind turbine is controlled to yaw in response to an absolute value of the wind direction deviation value being greater than a predetermined threshold and a duration in which the absolute value of the wind direction deviation value is greater than the predetermined threshold being greater than a predetermined time period

**FIG. 2**

S110 | A wind direction deviation value is determined based on an impeller alignment direction and an actual incoming wind direction of the wind turbine

S120 | The wind turbine is controlled to yaw in response to an absolute value of the wind direction deviation value being greater than a predetermined threshold and a duration in which the absolute value of the wind direction deviation value is greater than the predetermined threshold being greater than a predetermined time period

S130 | During controlling the wind turbine to yaw, each blade of the wind turbine is controlled in real time to pitch, so as to adjust a yaw-direction hub torque of the wind turbine

**FIG. 3**

S1401

The yaw-direction hub torque is obtained

S1402

A corresponding sign of a yaw gain is determined based on a sign of the wind direction deviation value

S1403

PI regulation is performed on a sum of the yaw-direction hub torque and the yaw gain to obtain a q-axis target pitch angle

S1404

Inverse dq transformation is performed on a d-axis target pitch angle and the q-axis target pitch angle to obtain a desired pitch angle value for each blade

S1405

Based on the desired pitch angle value for each blade and a common pitching signal, each blade is controlled, to pitch

**FIG. 4**

| Pitch bending moment | → | PI controller | → | D-axis target pitch angle |

| Yaw gain |

| Yaw-direction hub torque | → | Summing | → | PI controller | → | Q-axis target pitch angle |

**FIG. 5**

**FIG. 6**

FIG. 7

**FIG. 8**

800

810

First determination unit

820

First control unit

830

Second control unit

**FIG. 9**

## INTERNATIONAL SEARCH REPORT

| International application No. |
| --- |
| **PCT/CN2023/124163** |

| A. | CLASSIFICATION OF SUBJECT MATTER |
| --- | --- |

F03D7/02(2006.01)i;  F03D7/04(2006.01)i

According to International Patent Classification (IPC) or to both national classification and IPC

| B. | FIELDS SEARCHED |
| --- | --- |

Minimum documentation searched (classification system followed by classification symbols)

IPC:  F03D

Documentation searched other than minimum documentation to the extent that such documents are included in the fields searched

Electronic data base consulted during the international search (name of data base and, where practicable, search terms used)

VEN; VCN; ENTXT; CNTXT; CNKI: 风力, 发电机, 涡轮机, 风向, 偏差, 偏航, 变桨, 叶轮, 轮毂, 阈值, 预设时间, 绝对值, wind, generator, turbine, wind direction, offset, yaw, pitch, impeller, hub, threshold, preset time, absolute value

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101978161 A (MITSUBISHI HEAVY INDUSTRIES, LTD. et al.) 16 February 2011 (2011-02-16) <br> description, paragraphs [0006]-[0038] | 1, 8-11, 13, 15 |
| Y | CN 101978161 A (MITSUBISHI HEAVY INDUSTRIES, LTD. et al.) 16 February 2011 (2011-02-16) <br> description, paragraphs [0006]-[0038] | 2, 3, 12, 14 |
| Y | CN 114251223 A (UNIVERSAL ELECTRICAL RENEWABLE ENERGY SOURCE SPANISH CO., LTD.) 29 March 2022 (2022-03-29) <br> description, paragraphs 56-83 | 2, 3, 12, 14 |
| A | CN 102203412 A (MITSUBISHI HEAVY INDUSTRIES, LTD.) 28 September 2011 (2011-09-28) <br> entire document | 1-15 |
| A | CN 110273813 A (BEIJING JINFENG HUINENG TECHNOLOGY CO., LTD.) 24 September 2019 (2019-09-24) <br> entire document | 1-15 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 March 2024** | **21 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/124163** |

### C. DOCUMENTS CONSIDERED TO BE RELEVANT

| Category* | Citation of document, with indication, where appropriate, of the relevant passages | Relevant to claim No. |
| --- | --- | --- |
| A | CN 112523948 A (MINGYANG SMART ENERGY GROUP CO., LTD.) 19 March 2021 (2021-03-19)<br>entire document | 1-15 |
| A | US 2020040873 A1 (GENERAL ELECTRIC COMPANY) 06 February 2020 (2020-02-06)<br>entire document | 1-15 |

Form PCT/ISA/210 (second sheet) (July 2022)

## INTERNATIONAL SEARCH REPORT
### Information on patent family members

International application No.

**PCT/CN2023/124163**

| Patent document cited in search report | | | Publication date (day/month/year) | Patent family member(s) | | | Publication date (day/month/year) |
|---|---|---|---|---|---|---|---|
| CN | 101978161 | A | 16 February 2011 | BRPI | 0909020 | A2 | 22 September 2015 |
| | | | | JP | 2010106727 | A | 13 May 2010 |
| | | | | JP | 5199828 | B2 | 15 May 2013 |
| | | | | WO | 2010050260 | A1 | 06 May 2010 |
| | | | | AU | 2009308570 | A1 | 06 May 2010 |
| | | | | AU | 2009308570 | B2 | 27 September 2012 |
| | | | | TW | 201016962 | A | 01 May 2010 |
| | | | | TWI | 394891 | B | 01 May 2013 |
| | | | | CA | 2716155 | A1 | 06 May 2010 |
| | | | | US | 2011127772 | A1 | 02 June 2011 |
| | | | | US | 8450867 | B2 | 28 May 2013 |
| | | | | KR | 20100117119 | A | 02 November 2010 |
| | | | | KR | 101204216 | B1 | 26 November 2012 |
| | | | | EP | 2314869 | A1 | 27 April 2011 |
| | | | | EP | 2314869 | A4 | 13 November 2013 |
| | | | | EP | 2314869 | B1 | 31 May 2017 |
| CN | 114251223 | A | 29 March 2022 | US | 11231012 | B1 | 25 January 2022 |
| | | | | EP | 3971413 | A1 | 23 March 2022 |
| CN | 102203412 | A | 28 September 2011 | KR | 20110102137 | A | 16 September 2011 |
| | | | | KR | 101158193 | B1 | 19 June 2012 |
| | | | | EP | 2530304 | A1 | 05 December 2012 |
| | | | | EP | 2530304 | A4 | 16 July 2014 |
| | | | | BRPI | 1000003 | A2 | 10 February 2016 |
| | | | | CA | 2693802 | A1 | 27 July 2011 |
| | | | | CA | 2693802 | C | 21 May 2013 |
| | | | | JP | 5101689 | B2 | 19 December 2012 |
| | | | | JPWO | 2011092810 | A1 | 30 May 2013 |
| | | | | US | 2012112458 | A1 | 10 May 2012 |
| | | | | US | 8529206 | B2 | 10 September 2013 |
| | | | | WO | 2011092810 | A1 | 04 August 2011 |
| | | | | AU | 2010200682 | A1 | 11 August 2011 |
| CN | 110273813 | A | 24 September 2019 | None | | | |
| CN | 112523948 | A | 19 March 2021 | None | | | |
| US | 2020040873 | A1 | 06 February 2020 | US | 10837424 | B2 | 17 November 2020 |
| | | | | EP | 3604798 | A1 | 05 February 2020 |
| | | | | EP | 3604798 | B1 | 12 April 2023 |
| | | | | ES | 2949702 | T3 | 02 October 2023 |
| | | | | DK | 3604798 | T3 | 26 June 2023 |

Form PCT/ISA/210 (patent family annex) (July 2022)